# EUROPEAN PATENT SPECIFICATION

(11) **EP 1 167 139 B1**
(45) Date of publication and mention of the grant of the patent: **17.08.2005**
(21) Application number: 01830423.8
(22) Date of filing: 22.06.2001
(51) Int. Cl.: B60S 9/02, B60S 9/04

(54) **Device to lift the wheels of a vehicle off the ground**
Hebevorrichtung für Fahrzeugräder
Dispositif de levage de roue de véhicule

(30) Priority: 22.06.2000 IT RM000129 U
(43) Date of publication of application: 02.01.2002
(73) Proprietor: Riccardi, Fabio, 00176 Roma (IT); Silei, Andrea, 00176 Roma (IT)
(72) Inventor: Riccardi, Fabio, 00176 Roma (IT); Silei, Andrea, 00176 Roma (IT)
(74) Representative: Sneider, Massimo

(56) References cited:
- BE-A- 398 372
- FR-A- 686 913
- FR-A- 978 629
- FR-A- 1 006 209
- FR-A- 1 009 817
- GB-A- 506 319
- US-A- 5 702 089

## Description

### Scope of the invention

The subject of the present invention is a device which, when applied to the hub of the wheels of the vehicle, makes it possible to lift the wheels a few centimetres off the ground, placing the weight of the vehicle on the device, simply by moving the vehicle a few centimetres forward or backward of the position in which the device has been installed.

### State of the art

It is common knowledge that, if a motor vehicle remains stationary for a lengthy period of time, then the wheel tends to deform the tires at the point where these last rest on the ground; in such cases, when the motor vehicle is placed back in operation with the deformed tires, the driving proves uncomfortable, on account of vibrations, in addition to which safety is diminished.

The solution currently adopted to avoid this inconvenience involves lifting the vehicle onto specially designed racks, so that the weight does not rest on the tires; obviously, this solution is particularly bothersome, given that, every time the vehicle must be used, it is necessary to lift it with a jack in order to remove the racks, and then perform the operation in reverse the operation when the vehicle must remain stationary for a period of time; this solution also entails the risk of damaging the vehicle if the lifting operation and the positioning of the racks are not performed with sufficient skill.

The problem is of significant interest, given that it involves all motor vehicles equipped with tires and used intermittently, such as campers, certain commercial vehicles, trailers and historic automobiles, or automobiles used only in certain periods of the year, such as convertibles.

Various attempts have been made over the years to implement devices suitable to lift vehicles in a simple , safe and fast manner , but they have not given the desired results owing to the complexity of the systems that have been conceived and the difficulties being met in making them operational.An example of such an attempt is described in the French patent N° 976.629 which describes a system to lift the wheels of a vehicle based on the presence, on each axis to be raised , of a couple of wedges having a circular sector that may oscillate around the axis on which they are mounted . Each circular sector features a flat section that acts as the bearing surface on the ground . The curved part is eccentric with respect to the axis of rotation and is preferably fitted, with gears to increase its adhesion to the ground. In order to operate the lifting device there are braces comprising a lever fixed onto the chassis and an articulated bar that is set on the circular sector. By pulling the bar , the circular sector rotates until it gets to the vehicle lifting position , i.e. with the flat section resting on the ground. As an alternative , the rotation of the circular sectors may be obtained through a worm screw that fits in a geared circular body that forms an integral part of the circular sector. The device described in said document features a few drawbacks, like the fact that it needs to be permanently installed on the vehicle and that it requires stationary levels and braces that besides being rather complex , also need to be permanently installed on the vehicle . The solutions are definitely unacceptable for today's vehicles , even on account of safety reasons.

### Description of the invention

The subject of the present invention is an assembly of wheels of a stationary vehicle and devices for lifting the wheels of said stationary vehicle including a device which, when applied to the hub of the wheel of the vehicle, makes it possible to raise the vehicle a number of centimetres from the ground, placing the weight of the motor vehicle on the device, simply by moving the vehicle a few centimetres forward or backward of the position in which the device has been installed.

Based on the present model, the device consists of a metal plate moulded in the shape of a fan, with an eccentric external perimeter; this element is installed on the hub of each wheel of the vehicle, using special accessories; it is placed on the outside of the tire, with the portion presenting the shortest radius positioned close to the ground; the vehicle is then moved until the device is positioned with the part presenting the longest radius perpendicular to the ground; once the device has reached this position, the radius perpendicular to the ground is longer than the radius of the wheel, which runs from the hub to the outer circumference of the tires, meaning that the motor vehicle is no longer resting on the wheels but on the device.

The device, as briefly described, is built from steel or another suitable material and is equipped with a series of reinforcements arranged in a spoke pattern, running from the hub towards the exterior, up the internal wall of the support surface on which the weight of the vehicle rests, in such a way that the weight of the vehicle is equally distributed, discharging itself in the best way possible on the hub of the vehicle.

The device, at the point where it attaches to the vehicle, is equipped with a central slot and with a series of holes, placed at a short distance from one another, which allows correct positioning, based on the diameter of the wheel; there are also accessories which enable this attachment, including special bolts, a plate with a toothed hub that engages with the toothed cylindrical element found in the internal side of a second plate attached to this element; and there are bolts and safety stops.

### Brief description of the drawings

The features briefly described up to this point can be better understood from the detailed description which follows and which refers to the enclosed drawings; namely:
Figure 1 shows a schematic view of a wheel with the device in position but not in operation;
Figure 2 shows a view similar to that in figure 1, but with the device in the operating position;
Figure 3 is the exploded version of figure 2;
Figure 4 is a side view of alL the elements which make up the device;
Figure 5 is a front view of the internal side of the plate;
Figure 6 is a front view of the external side of the plate;
Figure 7 is a view of the toothed female support;
Figure 8 is axonometric view of the toothed female support shown in figure 7;
Figure 9 is a front view of the toothed plate for the attachment of the wheel;
Figure 10 is axonometric view of the plate shown in figure 9;
Figure 11 is a side view of the plate for attachment to the wheel;
Figure 12 is an axonometric view of the fixing bolt for attachment with a lever;
Figure 13 is a side view of the bolt shown in figure 12;
Figure 14 is a cross-section of the element used to lift the wheel;
Figure 15 shows an axonometric view of the outer side of the attachment plate;
Figure 15a shows a rear view of the plate that appears in figure 15;
Figure 15b shows a detail of the toothed element shown in figure 15;
Figure 16 shows an axonometric view of the plate for attaching the device, based on a variation installed on a wheel;
Figure 17 shows a front view of a different embodiment of the attachment plate that appears in figure 15;
Figure 17a shows a detail of a bolt inserted in the larger-size hole on the attachment plate, according to figure 17;
Figure 17b shows an axonometric view of the attachment plate, with the detail of the bolt inserted on the larger-size hole found in the plate according to figure 17;
Figure 17c shows a detail of a bolt for attachment of the plate to the hub of the wheel, according to figure 17;
Figure 18 shows a perspective view illustrating a different embodiment of the lifting device installed on a wheel;
Figure 18a shows an axonometric view of the lifting device installed on a wheel according to figure 18;
Figure 18b shows a front view of the lifting device installed on a wheel according to figure 18;
Figure 19 shows an enlarged view of figure 18a;
Figure 20 shows an axonometric view of the device based on the stop without a lever;
Figure 21 shows a detail of the lifting device, based on a different embodiment.

### Detailed description of a preferred design

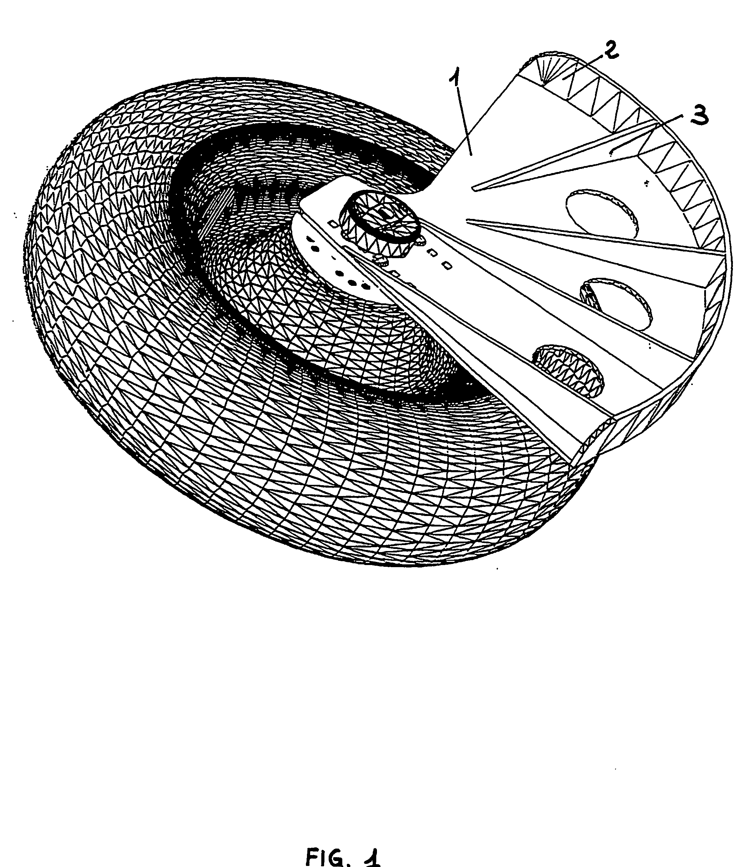

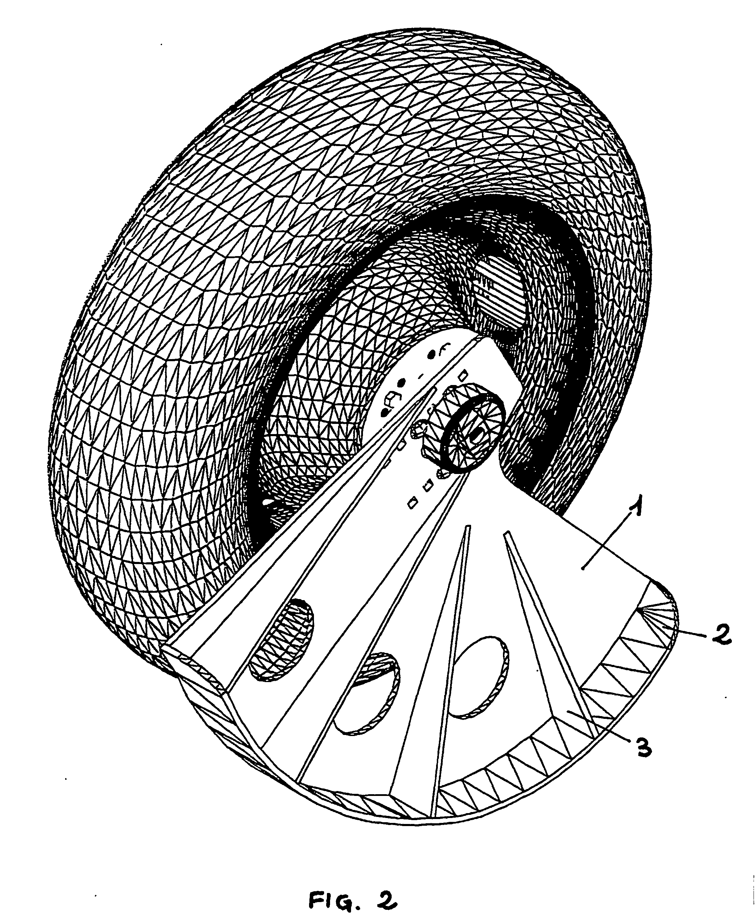

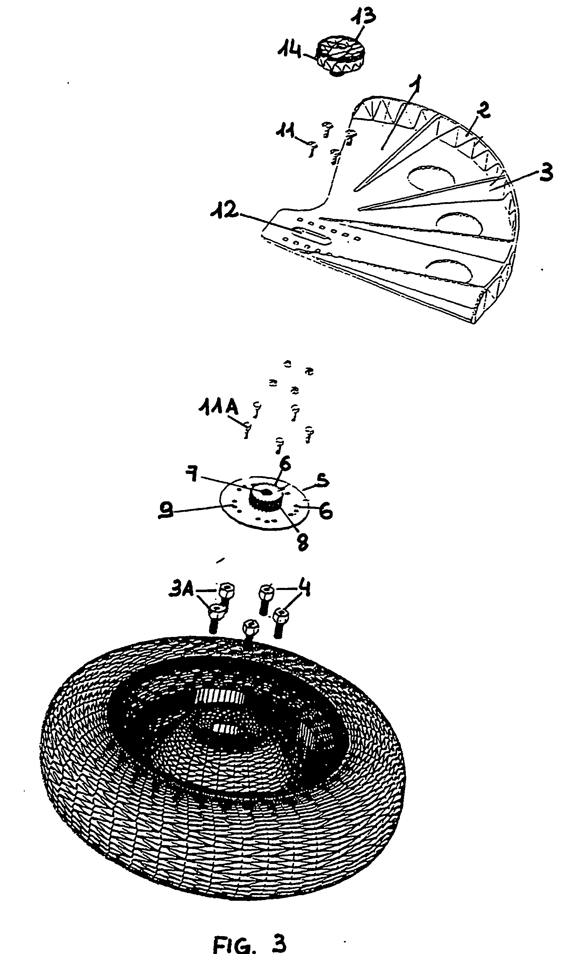

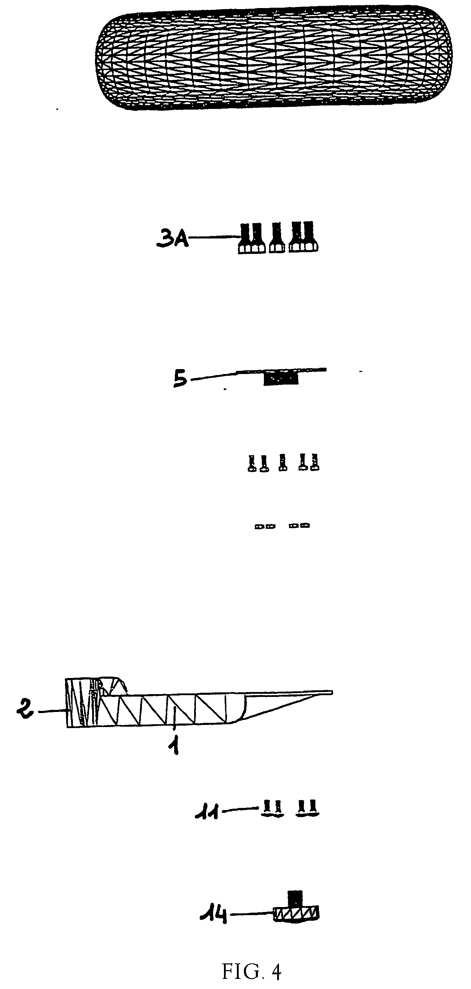

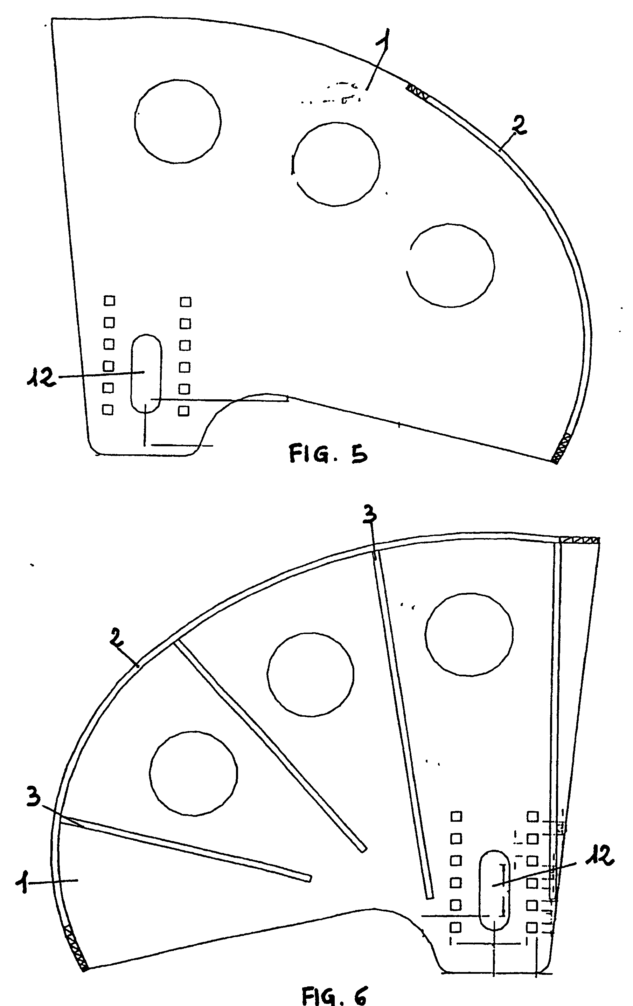

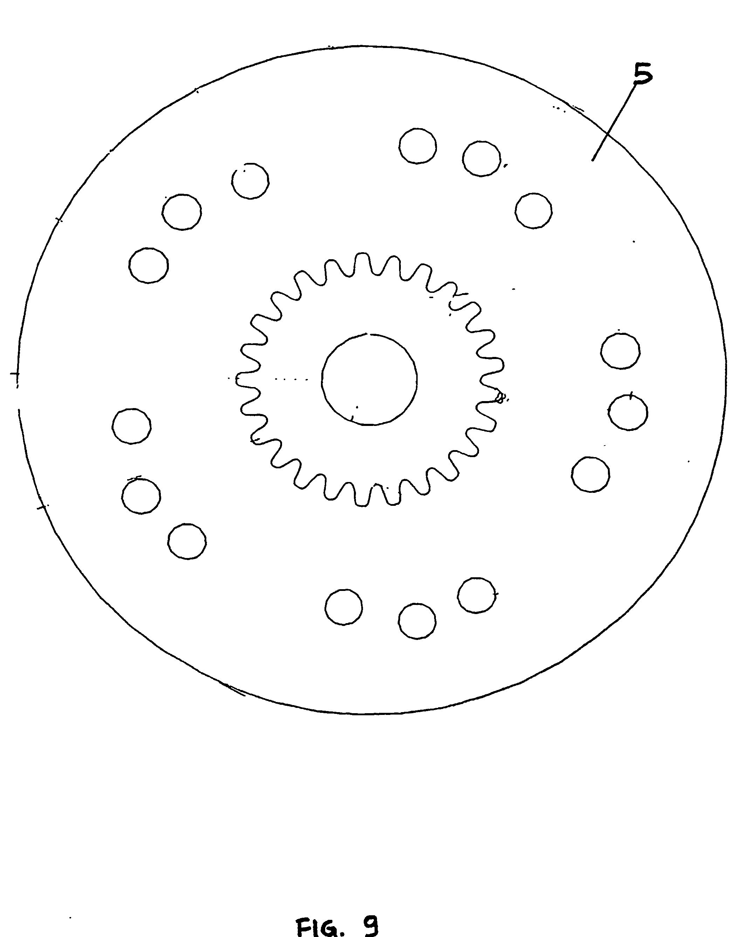

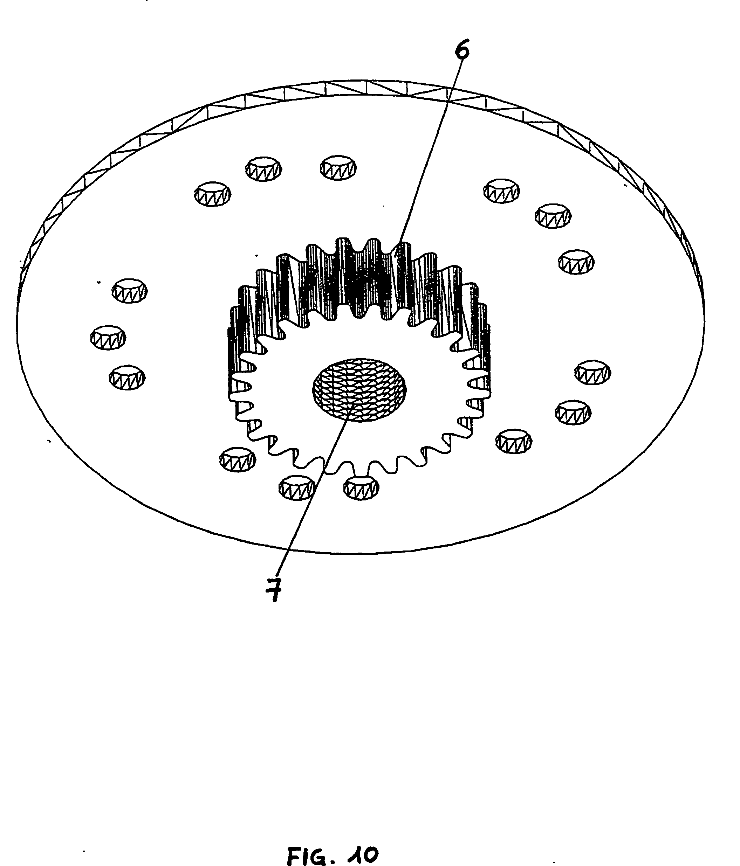

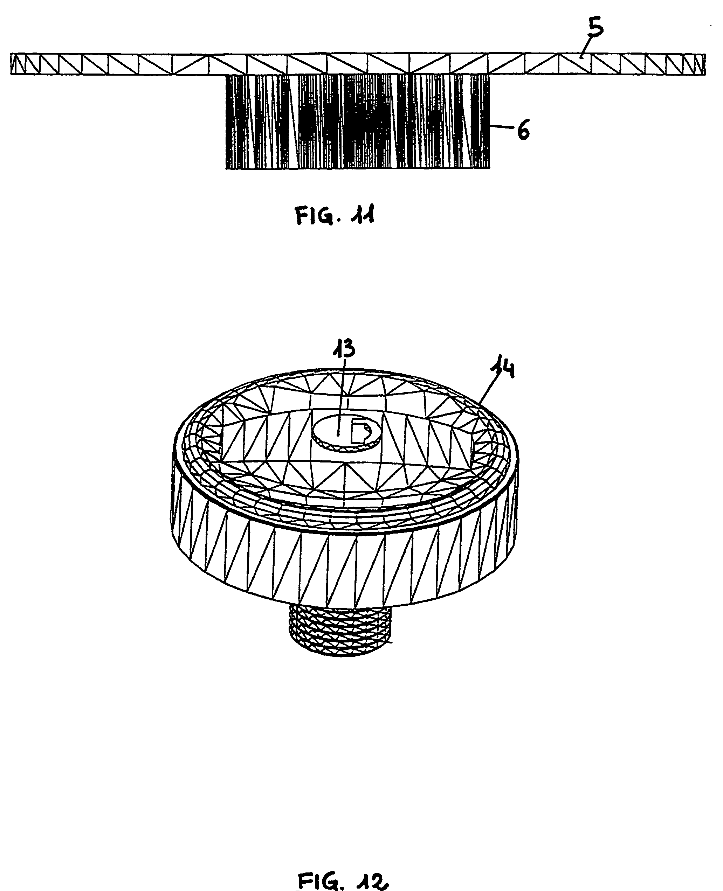

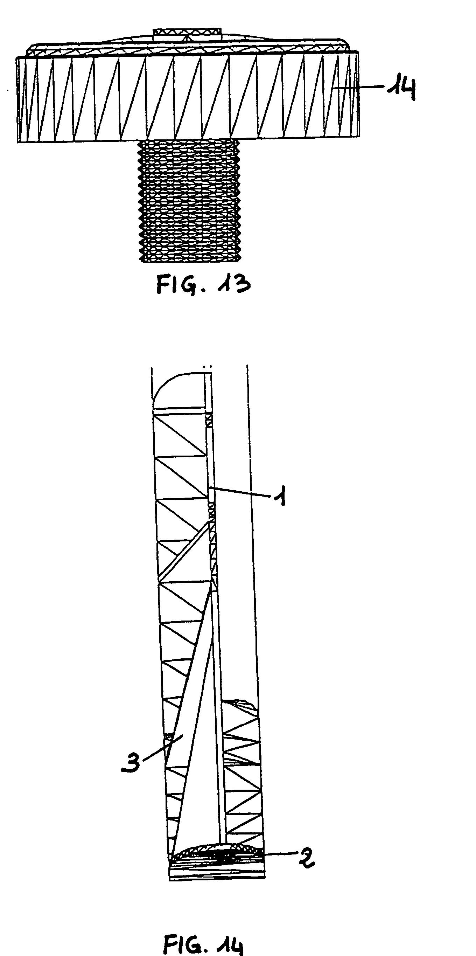

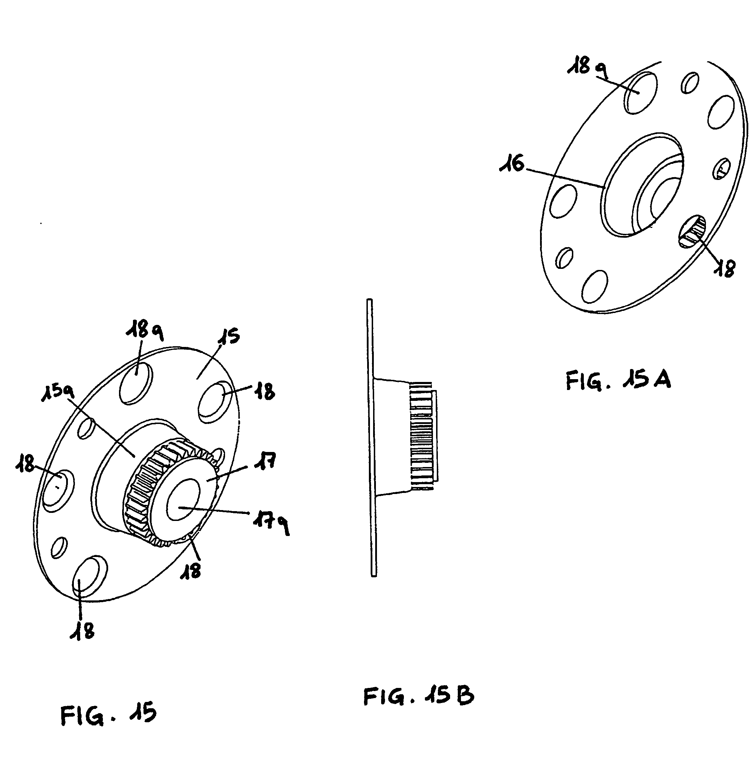

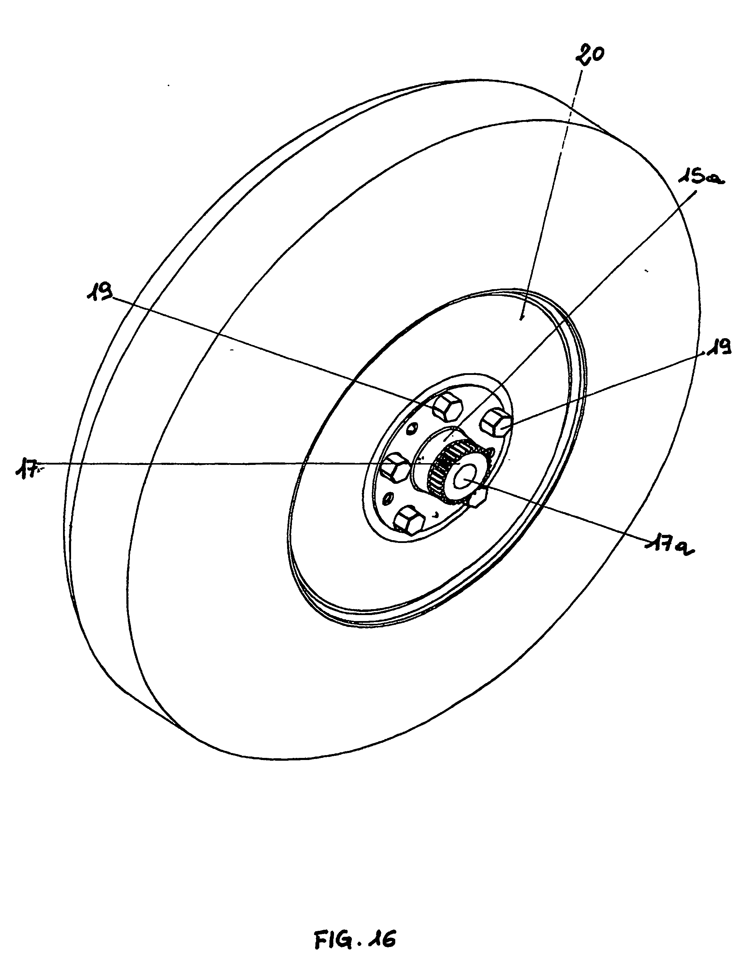

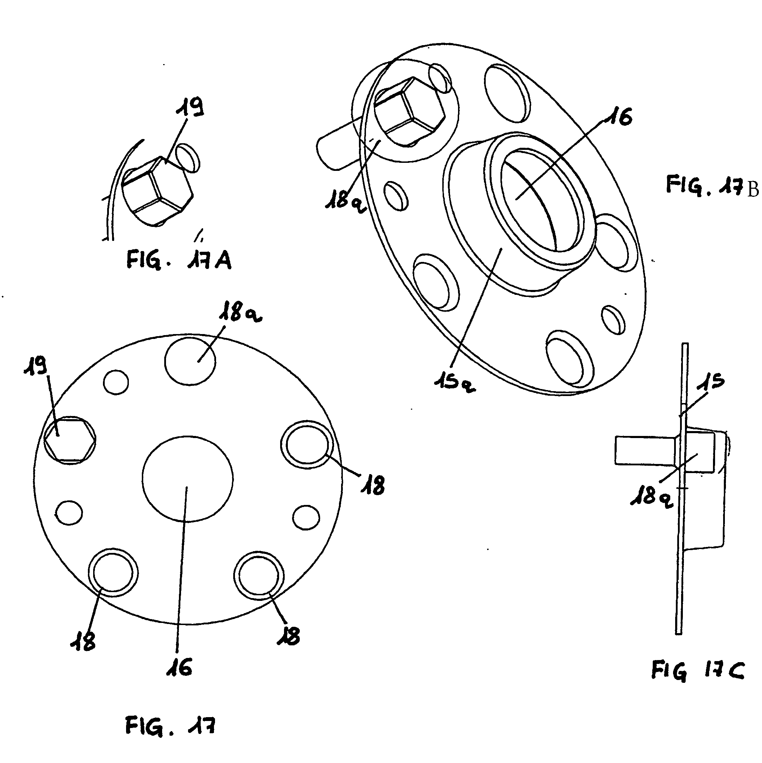

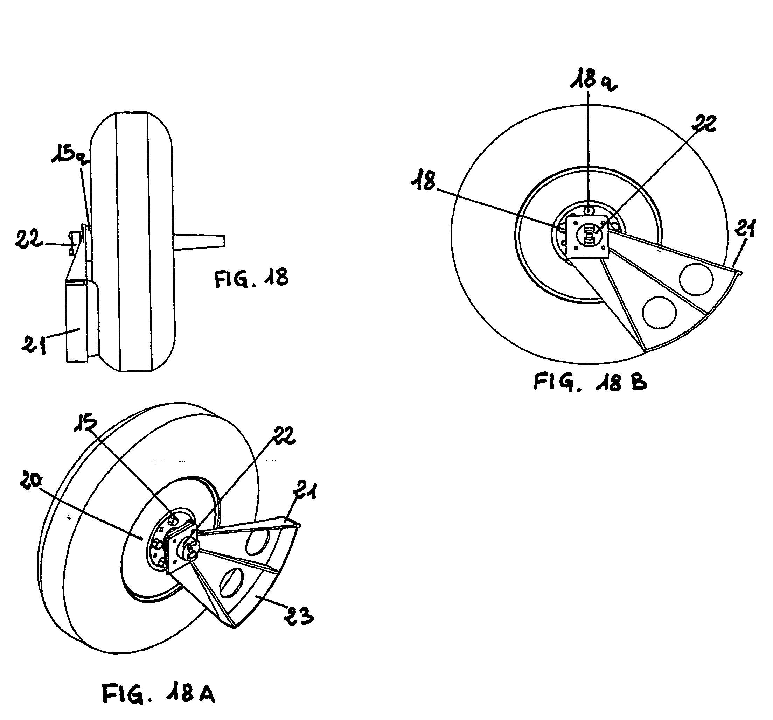

With regard to the above drawings, and in particular figures 1 through 14, the device for lifting the wheels of a vehicle from the ground consists of a part (1) that supports the vehicle, the part (1) being made of metal and moulded in a fan shape, with an external edge (2) that is asymmetric in relation to the centre; in practice, this element functions as an eccenter, making it possible to vary the distance of the hub from the ground, depending on the position it is given. If figures 1 and 2 are compared, it can be noted that, in figure 1, the device does not touch the ground, while, in figure 2, it is the wheel that does not touch the ground. The main element of the device is the lifting part (1), which, as mentioned earlier, is made of extremely resistant metal, and has an edge (2) whose width is capable of stably supporting the weight of the vehicle lifted. A series of stiffening elements (3) contributes to the solidity of the edge (2), in addition to distributing the weight of the vehicle over the hub in a uniform manner.

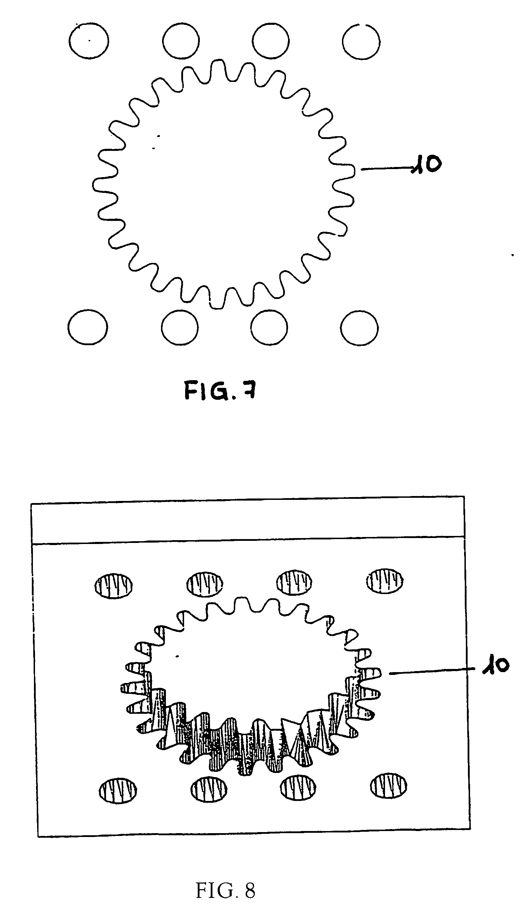

The device (1) is anchored to the hub of the wheel in the following manner: the bolts that anchor the wheel to the hub are replaced with bolts (3a) whose central portion (4) is threaded; positioned above the bolts (3a) is the toothed plate (5), in the centre of which is an element (6) threaded at the centre (7) and toothed (8) on its external circumference; on the plate (5) there are holes (9) which make it possible to attach the lifting device (1) to the toothed plate (5), after having positioned the teeth (8) of this plate in the toothed plate (10) as shown in figures 7 and 8 and part of the same piece with the lifting device (1); the lifting device (1) is then attached with bolts (11), and with the central bolt (14) to the toothed plate (5), after the best possible position has been found, with respect to the diameter of the wheel, using the oblong slot (12). The lever (13) which has to be positioned at the centre of the bolt (14) serves as an anti-theft device.

At the point where the distance from the support edge (2) to the hub is greatest, there is an additional internal support base that makes the vehicle more stable when it is in the lifted position.

As can be seen in the drawings included as appendices, and as was previously mentioned, both the female toothed support (10) and the toothed plate for attachment to the wheel, and the main element (1) are equipped with a series of holes that make it possible, in combination with the oblong slot (12), to position the element (1) higher or lower, depending on the diameter of the vehicle wheel, in this way making it possible to limit the number of models needed to cover all possible dimensions of wheels and, at the same time, allowing the owner to mount the device on vehicles of different sizes.

Obviously, the device described must be installed on each wheel of the vehicle.

The presence of the female and male toothed plates (5, 10) makes it possible to transmit the motion of the wheels to the device without any problem, with the device on each of the wheels being set in the same, identical position, so that, once the devices are placed in their operating position, the vehicle rests on the devices in a stable manner, without any discrepancies between one wheel and the other.

As mentioned earlier, the device functions in a simple manner; the first operation is to remove the normal bolts from the wheel and to replace them with the bolts (3a) with threading (4) at the centre of their heads; next, the toothed plate (5) is positioned and attached with the proper bolts, and the female and male teeth on the plates (5) and (10) are aligned; at this point, the best position is found for the lifting device (1), with respect to the wheels, by using the different holes found on the element, plus the central oblong slot (12), and the entire device is fixed using the side bolts and the central bolt (14), which is equipped with the theft-prevention closure (13).

As is obvious, the disassembly of the device, necessary in order to use the vehicle, does not require complete disassembly of all the pieces, but only of device 1, meaning that it is sufficient to remove the central bolt (14) and the side bolts (11).

In a variation to what has been described so far, for the purpose of facilitating the assembly of the device, and in particular for vehicles used more frequently and for which the assembly according to the method described would prove bothersome inconvenient, given that it would have to be repeated frequently, a device has been designed that attaches itself to the wheel and that facilitates the use of the main device.

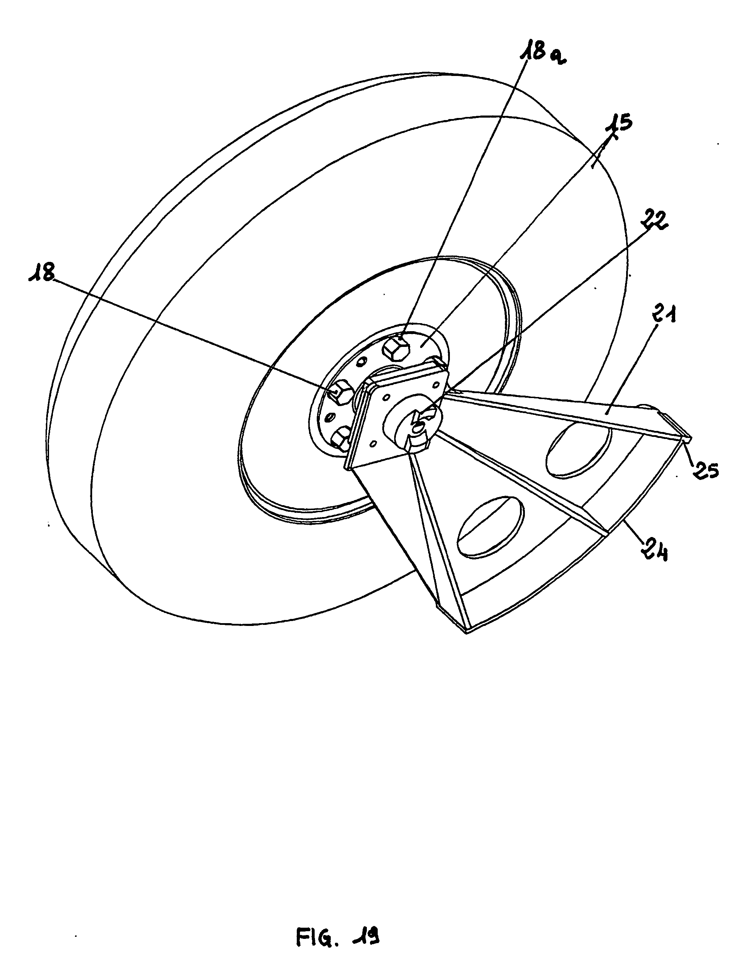

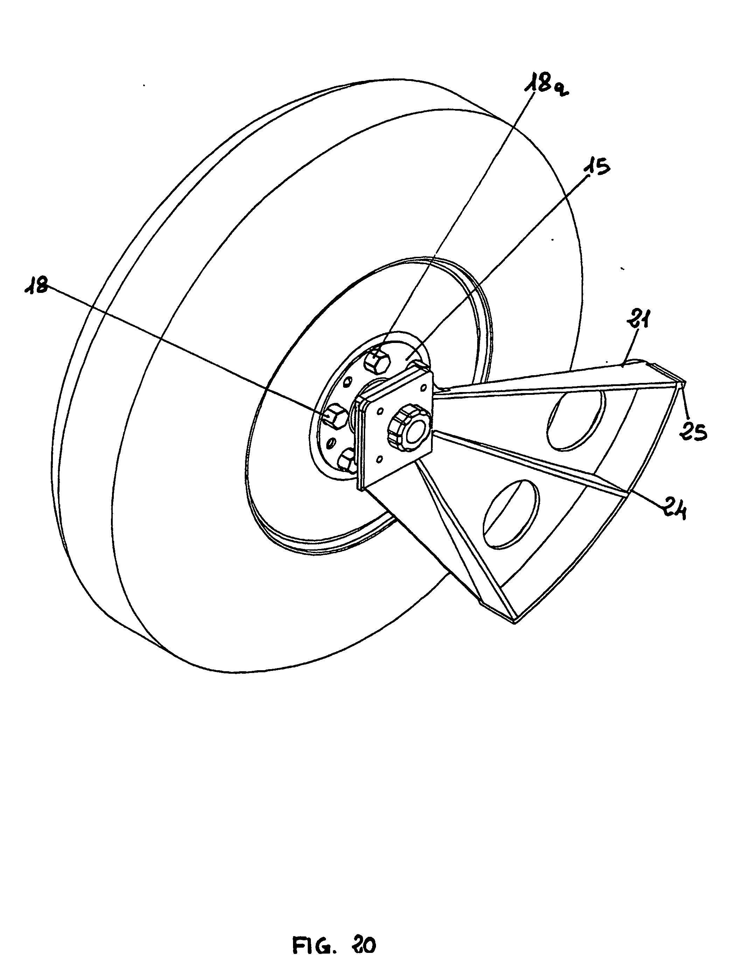

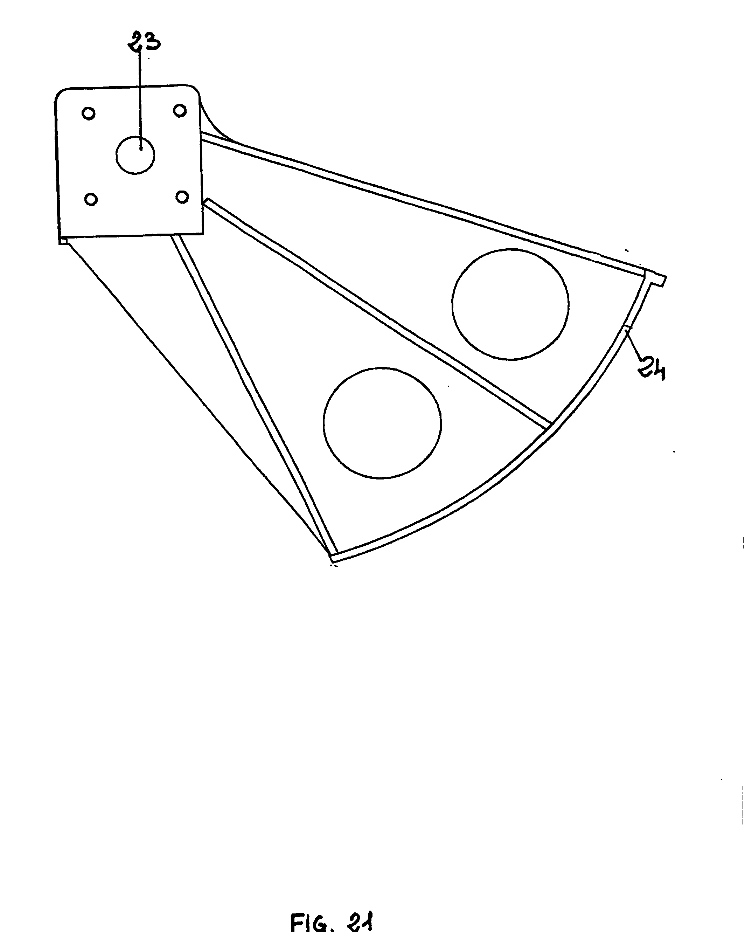

The variation illustrated in figures 15 to 21 consists of a boss (15) made of steel or of another suitable material pressed in a funnel mould (15a), with a hole in the central portion (16); a gear (17), threaded in its inside portion (17a) is welded to the funnel portion (15a). The boss (15) is provided with five holes (18) along its perimeter, one of which - for example hole (18a), will be larger than the others; the boss (15) is attached to the wheel rim (20) with bolts (19) which also attach the rim (20) to the hub of the wheels of the vehicle (15) and the hub to the rim (20) simultaneously; the bolt (19) housed in the largest hole - for example, hole (18a) - attaches the rim (20) directly to the hub of vehicle, without the boss (15) needing to be placed in between. In order to make the attachment of the rim (20) to the hub more secure, the holes (18) on the boss (15) are staggered, thus making it possible for the heads of the bolts (19) to "touch" the rim (20).
The boss (15) can, therefore, remain permanently attached to the rim (20) of the vehicle and be ready to hold he device for lifting the wheels (21). A female gear which has a hole at its centre and fits perfectly into the male gear (17) welded onto the boss (15) is welded to the device for lifting the wheels (21), on the portion facing the wheel of the vehicle; a screw knob (22) passes through the centre of the female gear and screws into the threading found in the inner portion (17a) of the gear (17), securely attaching the device (21) to the boss (15), which, as mentioned earlier, is, in turn, attached to the rim of the vehicle. The screw knob (22) is equipped with an anti-theft lever that functions in a manner similar to those used for gasoline tank taps.

In this variation, the size of the lifting device (21) is slightly smaller than that described previously, with a raised portion (25) at the point in which the radius, calculated from the centre of the attachment slot and the external circumference of the device (24) is greatest; this serves as a run stopper, alerting the user to the fact that the device has arrived at the maximum lifting point for the wheels while, at the same time, preventing sliding of the wheels.

In order to facilitate the insertion of the female gear onto the male gear (17), the external form of the latter present a diameter that is roughly 3-4 mm smaller than the female gear, making it easier to fit the lifting device (21) onto the gear.

It is important to note that, when the device is attached to the hub of the wheel, the operating position does not affect the functioning of the shock absorbers, whilst making it possible to limit the length of the largest radius of the device and therefore its bulk and its weight.

## Claims

1. Assembly of wheels of a stationary vehicle and devices for lifting the wheels of said stationary vehicle from the ground, each of the device comprising:
a device (1) for supporting the vehicle made of metal and moulded in a fan shape, with a support edge (2) perpendicular to the plane of the device , and in eccentric position with respect to the centre of the wheel upon which the device is mounted, so that variations can be made , following assembly on the vehicle, to the distance of the support edge from the hub of said wheel, depending on the position taken up during the rotation of said wheel; the device (1) is equipped with slots and holes for the insertion of bolts;
**characterised by**
a toothed plate (5) whose centre holds a piece (6) threaded at its centre (7) and toothed (8) on its external circumference; the toothed plate (5) is equipped with holes (9) for the attachment of the lifting device (1) to the toothed plate (5); a female toothed plate (10), that is all one piece with the known parts of the lifting device (1), and the teeth of the female toothed plate (10) mesh with the teeth (8) of the toothed plate (5)
bolts (3a) which have a central threaded portion and which replace the regular bolts of the vehicle ; bolts (11a) that attach the toothed plate (5) to the bolts (3a) that replace the regular bolts used to attach the wheel; bolts (11) that attach the lifting device (1) to the toothed plate (5);
a knob bolt (14) with a lever (13) that functions as an anti-theft device and screws into the threading at the centre (7) of the toothed element (8) of the toothed plate (5).

2. Assembly of wheels of a stationary vehicle and devices for lifting the wheels of said stationary vehicle from the ground according to the preceding claim, and **characterised by** the fact that said device (1) is mounted by connecting it to the hub of the wheel on the external side of each of the tires, positioning it in an identical manner on each tire, in such a way that it does not touch the ground; later, the vehicle is shifted until the device (1) has reached, rotating together with the wheels of the vehicle, the position in which, thanks to the eccentric external perimeter (2), the wheels of the vehicle no longer touch the ground.

3. Assembly of wheels of a stationary vehicle and devices for lifting the wheels of said stationary vehicle from the ground, according to the preceding claims, and **characterised by** the fact that the toothed female plate (10) is coupled to the toothed plate (5), after the exact position with respect to the ground has been determined; then the device (1) is attached to the female plate (10) with bolts (11) that are inserted in the side holes, plus a central bolt (14) that is inserted in an oblong slot (12) of said device.

4. Assembly of wheels of a stationary vehicle and devices for lifting the wheels of said stationary vehicle from the ground, according to the preceding claims, and **characterised by** the fact that, in order to obtain greater stability and resistance, the support edge (2) of the device touching the ground is also present on the inside portion in the area where the radius is greatest.

5. Assembly of wheels of a stationary vehicle and devices for lifting the wheels of said stationary vehicle from the ground, according to the preceding claims, and **characterised by** the fact that the central bolt (14) is equipped with an anti-theft lock (13).

6. Assembly of wheels of a stationary vehicle and devices for lifting the wheels of said stationary vehicle from the ground ,each of the device comprising:
a lifting device (21) moulded in the form of an eccentric fan, with a support surface (23) perpendicular to the plane of the device;
**characterised by** ,
a plate attached at the top portion of said lifting device with a side facing the wheel, a female gear welded to the side of the plate facing the wheel, and a circular steel boss (15) moulded with a funnel portion (15a) and designed to be attached directly to the rim (20) of the wheel; a male gear (17) threaded internally (17a) is positioned on the funnel shaped portion of said boss (15) ; the boss (15) includes five holes (18-18a) placed along its perimeter and corresponding to holes in the wheel rim (20);
said female gear being suitable for being mounted on said male gear (17); screw bolts (19) which attach the boss (15) to the hub (20) of the wheel of the vehicle;
a screw knob (22) which passes through the middle of the female gear and screws onto the threading (17a) on the male gear (17), in order to create a connection between the lifting device (21) and the boss (15).

7. Assembly of wheels of a stationary vehicle and devices for lifting the wheels of said stationary vehicle from the ground, according to claim 6 and **characterised by** the fact that one of the holes (18) on the boss (15) is larger than the others, in this way permitting the bolt (19) to attach directly to the rim (20) of the wheel.

8. Assembly of wheels of a stationary vehicle and devices for lifting the wheels of said stationary vehicle from the ground, according to claims 6 and 7 and **characterised by** the fact that the holes (18) on the boss (15) present a staggered alignment that allows the heads of the bolts (19) to ouch the rim (20).

9. Assembly of wheels of a stationary vehicle and devices for lifting the wheels of said stationary vehicle from the ground, according to claims 6, 7 and 8 and **characterised by** the fact that the lifting device (21) presents, at the point in which the radius calculated between the centre of the attachment slot and the external circumference is greatest, a raised portion (25) which represents the maximum distance of the vehicle from the ground, as well as an element preventing slipping of the wheels.

## Patentansprüche

1. Ein aus den Rädern eines geparkten Fahrzeuges und aus den Systemen bestehender Komplex, der dazu bestimmt ist, die Räder dieses abgestellten Fahrzeuges vom Boden abzuheben, wobei jedes System folgendes umfaßt :
eine Halterungsvorrichtung (1) des Fahrzeuges, in gesenkgeschmiedetem Metall, in Form einer Schaufel, einem senkrecht zur Fläche der Vorrichtung angeordneten Halterungsrand (2) (in ausmittiger Position im Verhältnis zur Mitte des Rades, für das die Vorrichtung montiert ist), und zwar in der Weise, daß die Entfernung zwischen dem Halterungsrand und der Nabe des fraglichen Rades (nach Zusammenbau des Fahrzeuges) verändert werden kann gemäß der Position, die während der Drehung des Rades angenommen worden ist; die Vorrichtung (1) ist mit Anschnitten und Bohrungen zum Einsetzen der Schraubenbolzen versehen;
Komplex, der sich auszeichnet durch das Vorhandensein
- einer verzahnten Platte (5), in deren Mitte ein geschnittenes (7), auf seinem Außendurchmesser verzahntes (8) Element (6) vorgesehen ist; die verzahnte Platte (5) ist mit Bohrungen (9) für die Befestigung der Hebevorrichtung (1) an der verzahnten Platte (5) versehen;
- einer verzahnten Plattenmutter (10), die ein einziges Stück mit den gemeinsamen Teilen der Hebevorrichtung (19) bildet; die Zähne der Plattenmutter (10) sind in Eingriff mit den Zähnen (8) der Platte (5);
- von Schraubenbolzen (3a) mit einem geschnittenen zentralen Teil, die die normalen Schraubenbolzen des Fahrzeuges ersetzen : Schraubenbolzen (11a), mit denen die verzahnte Platte (5) an den Schraubenbolzen (3a) befestigt wird, die die normalen Schraubenbolzen ersetzen, die für die Befestigung des Rades verwendet werden;
- von Schraubenbolzen (11), mit denen die Hebevorrichtung (1) an der verzahnten Platte (5) befestigt wird;
- eines Zapfenbolzens (14) mit einem Hebel (13), der als Diebstahlschutz dient und in den Gewindeteil in der Mitte (7) des verzahnten Elements (8) der Platte (5) geschraubt ist.

2. Ein aus den Rädern eines abgestellten Fahrzeuges und den Systemen bestehender Komplex, der dazu bestimmt ist, die Räder dieses abgestellten Fahrzeuges vom Boden abzuheben, gemäß vorstehendem Patentanspruch,
der sich dazu auszeichnet, daß das fragliche System (1) montiert und von der Außenseite eines jeden Reifens in gleicher Weise mit der Radnabe verbunden wird, sodaß alle Reifen den Boden nicht berühren; anschließend wird das Fahrzeug verstellt, bis die Vorrichtung (1) - durch gleichzeitiges Drehen der Räder des Fahrzeuges - nicht die Stellung erreicht hat, in der die Fahrzeugräder, dank des außermittigen Außenumfangs (2), den Boden nicht mehr berühren.

3. Ein aus den Rädern eines abgestellten Fahrzeuges und den Systemen bestehender Komplex, der dazu bestimmt ist, die Räder dieses abgestellten Fahrzeuges vom Boden abzuheben, gemäß den vorstehenden Patentansprüchen,
der sich dazu auszeichnet, daß die verzahnte Plattenmutter (10) mit der verzahnten Platte (5) gekoppelt ist, nachdem die genaue Position im Verhältnis zum Boden bestimmt wwurde; anschließend wird die Vorrichtung (1) an der Plattenmutter (10) mit Schraubenbolzen (11) befestigt, die in die Seitenbohrungen eingeführt werden, und an einem zentralen Schraubenbolzen (14), der in einem länglichen Einschnitt (12) der fraglichen Vorrichtung gelagert ist.

4. Ein aus den Rädern eines abgestellten Fahrzeuges und den Systemen bestehender Komplex, der dazu bestimmt ist, die Räder dieses abgestellten Fahrzeuges vom Boden abzuheben, gemäß den vorstehenden Patentensprüchen,
der sich **dadurch** auszeichnet, daß (in der Absicht, eine bessere Stabilität und Festigkeit zu erzielen) der Rand der Halterung (2) der Vorrichtung, der den Boden berührt, auch auf dem internen Teil der Stelle vorhanden ist, an der der Radius am größten ist.

5. Ein aus den Rädern eines abgestellten Fahrzeuges und den Systemen bestehender Komplex, der dazu bestimmt ist, die Räder dieses abgestellten Fahrzeuges vom Boden abzuheben, gemäß den vorstehenden Patentansprüchen,
der sich **dadurch** auszeichnet, daß der zentrale Schraubenbolzen (14) einen Diebstahlschutz (13) aufweist.

6. Ein aus den Rädern eines abgestellten Fahrzeuges und den Systemen bestehender Komplex, der dazu bestimmt ist, die Räder dieses Fahrzeuges vom Boden abzuheben, wobei jedes System folgendes umfaßt :
eine gesenkgeschmiedete Hebevorrichtung (21) in Form einer exzentrischen Schaufel, deren Halterungsfläche (23) senkrecht zur Ebene der Vorrichtung verläuft, ausgezeichnet durch das Vorhandensein
- einer Platte, die am oberen Teil der fraglichen Hebevorrichtung befestigt ist, einer Seite, die dem Rad gegenüberliegt, einer (auf der Seite der Platte, gegenüber dem Rad aufgeschweißten) Radmutter, einem ringförmigen Wulst in weichem Stahl (15) mit einem trichterförmigen, direkt auf der Radfelge (20) zu befestigendem Teil; ein Kernrad (17) mit internem Gewinde (17a) ist auf dem trichterförmigen Teil des Wulstes (15) vorgesehen, der (15) fünf Bohrungen längs seines Umfangs und ausgerichtet auf die Bohrungen in der Radfelge (20) aufweist;
- der Radmutter, die auf den Radkern (17) montiert werden kann; geschnittener Schraubenbolzen (19), mit denen der Wulst (15) an der Radnabe des Fahrzeuges befestigt ist;
- eines geschnittenen Knopfes (22), der durch die Mitte der Radmutter verläuft und auf das Gewinde (17a) des Kernrades (17) aufgeschraubt wird, um eine Verbindung zwischen der Hebevorrichtung (21) und dem Wulst (15) zu schaffen.

7. Ein aus den Rädern eines abgestellten Fahrzeuges und den Systemen bestehender Komplex, der dazu bestimmt ist, die Räder dieses abgestellten Fahrzeuges vom Boden abzuheben, gemäß Patentanspruch 6,
der sich durch die Tatsache auszeichnet, daß eine der Bohrungen (18) des Wulstes (15) größer als die anderen ist und damit erlaubt, den Schraubenbolzen (19) direkt auf der Radfelge (20) zu befestigen.

8. Ein aus den Rädern eines abgestellten Fahrzeuges und den Systemen bestehender Komplex, der dazu bestimmt ist, die Räder dieses abgestellten Fahrzeuges vom Boden abzuheben, gemäß den Patentansprüchen 6 und 7,
der sich durch die Tatsache auszeichnet, daß die Bohrungen (18) des Wulstes (15) versetzt ausgerichtet sind, was den Kontakt der Schraubenköpfe mit der Felge (20) erlaubt.

9. Ein aus den Rädern eines abgestellten Fahrzeuges und den Systemen bestehender Komplex, der dazu bestimmt ist, die Räder dieses abgestellten Fahrzeuges vom Boden abzuheben, gemäß den Patentansprüchen 6, 7 und 8,
der sich durch die Tatsache auszeichnet, daß die Hebevorrichtung (21) (an der Stelle, an der der Radius zwischen der Mitte des Befestigungseinschnitts und dem Außenumfang am größten ist) einen Wulst (25) aufweist, der die größte Entfernung zwischen Fahrzeug und Boden darstellt, sodaß ein Element vorgesehen ist, das den Schlupf der Räder verhindert.

## Revendications

1. Ensemble formé par les roues d'un véhicule en stationnement et des systèmes pour soulever du sol les roues de ce véhicule en stationnement, chaque système comprenant:
un dispositif (1) de support du véhicule, en métal moulé en forme de pale, un bord du support (2) étant perpendiculaire au plan du dispositif, et en position excentrique par rapport au centre de la roue sur laquelle le dispositif est monté, de sorte que l'on puisse effectuer, après l'assemblage du véhicule, des variations de la distance entre le bord du support e le moyeu de la roue en question, selon la position adoptée pendant la rotation de la roue; le dispositif (1) porte des encoches et des orifices pour l'insertion de boulons;
**caractérisé par**
une plaque dentée (5) dont le centre porte un élément (6) fileté au centre (7) et denté (8) sur sa circonférence extérieure; la plaque dentée (5) porte des orifices (9) pour la fixation du dispositif de soulèvement (1) à la plaque dentée (5); une plaque dentée femelle (10), qui forme un tout avec les parties connues du dispositif de soulèvement (1), les dents de la plaque dentée femelle (10) sont en prise sur les dents (8) de la plaque dentée (5);
des boulons (3a) qui ont une partie filetée centrale et qui remplacent les boulons réguliers du véhicule:
des boulons (11a) qui fixent la plaque dentée (5) aux boulons (3a) qui remplacent les boulons réguliers utilisés pour fixer la roue; des boulons (11) qui fixent le dispositif de soulèvement (1) à la plaque dentée (5);
un boulon à verrou (14) avec un levier (13) qui fonctionne comme dispositif anti-vol et est vissé sur la partie filetée au centre (7) de l'élément denté (8) de la plaque dentée (5).

2. Ensemble formé par les roues d'un véhicule en stationnement et des systèmes pour soulever du sol les roues de ce véhicule en stationnement, selon la revendication précédente, **caractérisé par le fait que** l'on monte le système en question (1) en le connectant au moyeu de la roue du côté extérieur de chacun des pneumatiques, en le plaçant de la même manière sur chaque pneumatique, de façon qu'il ne touche pas le sol; plus tard, on déplace le véhicule jusqu'à ce que le dispositif (1) ait atteint, en pivotant en même temps que les roues du véhicules, la position dans laquelle, grâce au périmètre extérieur excentrique (2) les roues du véhicule ne touchent plus le sol.

3. Ensemble formé par les roues d'un véhicule en stationnement et des systèmes pour soulever du sol les roues de ce véhicule en stationnement, selon les revendications précédentes, **caractérisé par le fait que** la plaque dentée femelle (10) est accouplée à la plaque dentée (5), après que la position exacte par rapport au sol ait été déterminée; ensuite on fixe le dispositif (1) à la plaque femelle (10) par des boulons (11) qui sont introduits dans les orifices latéraux, plus un boulon central (14) qui est introduit dans une encoche oblongue (12) du dispositif en question.

4. Ensemble formé par les roues d'un véhicule en stationnement et des systèmes pour soulever du sol les roues de ce véhicule en stationnement, selon les revendications précédentes, **caractérisé par le fait que**, afin que soient obtenues une stabilité et une résistance supérieures, le bord du support (2) du dispositif touchant le sol est également présent sur la partie interne dans la zone où le rayon est le plus grand.

5. Ensemble formé par les roues d'un véhicule en stationnement et des systèmes pour soulever du sol les roues de ce véhicule en stationnement, selon les revendications précédentes, **caractérisé par le fait que** le boulon central (14) est équipé d'un verrou anti-vol (13).

6. Ensemble formé par les roues d'un véhicule en stationnement et des systèmes pour soulever du sol les roues de ce véhicule en stationnement, chaque système comprenant:
un dispositif de soulèvement (21) moulé en forme de pale excentrique, dont une surface de support (23) est perpendiculaire au plan du dispositif:
**caractérisé par**:
- une plaque attachée à la partie supérieure du dispositif de soulèvement en question, un côté face à la roue, un engrenage femelle soudé au côté de la plaque face à la roue, et un bossage circulaire en acier (15) moulé avec une partie en entonnoir (15a) et conçu pour être fixé directement à la jante (20) de la roue; un engrenage mâle (17) fileté à l'intérieur (17a) est positionné sur la partie en forme d'entonnoir du bossage (15); le bossage (15) porte cinq orifices (18-18a) placés le long de son périmètre et correspondant à des orifices dans la jante de la roue (20);
- l'engrenage femelle apte à être monté sur l'engrenage mâle (17); des boulons filetés (19) qui fixent le bossage (15) au moyeu (20) de la roue du véhicule;
- un bouton fileté (22) qui passe par le milieu de l'engrenage femelle et se visse sur le filetage (17a) de l'engrenage mâle (17),
afin de créer une connexion entre le dispositif de soulèvement (21) et le bossage (15).

7. Ensemble formé par les roues d'un véhicule en stationnement et des systèmes pour soulever du sol les roues de ce véhicule en stationnement, selon la revendication 6, **caractérisé par le fait que** l'un des orifices (18) du bossage (15) est plus grand que les autres, permettant ainsi de fixer le boulon (19) directement sur la jante (20) de la roue.

8. Ensemble formé par les roues d'un véhicule en stationnement et des systèmes pour soulever du sol les roues de ce véhicule en stationnement, selon les revendications 6 et 7, **caractérisé par le fait que** les orifices (18) du bossage (15) présentent un alignement décalé qui permet le contact des têtes des boulons (19) sur la jante (20).

9. Ensemble formé par les roues d'un véhicule en stationnement et des systèmes pour soulever du sol les roues de ce véhicule en stationnement, selon les revendications 6, 7 et 8, **caractérisé par le fait que** le dispositif de soulèvement (21) présente, au point où le rayon calculé entre le centre de l'encoche de fixation et la circonférence extérieure est le plus grand, une partie relevée (25) qui représente la distance maximum entre le véhicule et le sol, ainsi qu'un élément s'opposant au patinage des roues.
